**Europäisches Patentamt**

**European Patent Office**

**Office européen des brevets**

(19)

(11) Publication number : **0 504 119 A1**

(12) **EUROPEAN PATENT APPLICATION**

(21) Application number : **92830104.3**

(22) Date of filing : **05.03.92**

(51) Int. Cl.⁵ : **A61C 8/00**

Priority: 140391 IT RM91000169.

(30) Priority : **14.03.91**

(43) Date of publication of application :
**16.09.92 Bulletin 92/38**

(84) Designated Contracting States :
**CH DE ES FR GB LI**

(71) Applicant : **Marini, Ettore**
**101 Via Val d'Arno**
**I-00141 Roma RM (IT)**

(72) Inventor : **Marini, Ettore**
**101 Via Val d'Arno**
**I-00141 Roma RM (IT)**
Inventor : **Valdinucci, Federica Maria**
**101 Via Val d'Arno**
**I-00141 Roma RM (IT)**

(74) Representative : **Di Cerbo, Mario et al**
**Società Italiana Brevetti S.p.A., Piazza di**
**Pietra 39**
**I-00186 Roma (IT)**

(54) **Article for dental implantation with abutment capable of multiple orientation.**

(57) Article for dental implantation, characterized in that it essentially consists of a combination of the following parts :

— an endossial element (1), optionally threaded, with a widened head (2) with the internal housing having a cross-section profile in the form of a regular polygon (3), with a hollow central portion (4), optionally threaded on its inside (5), with a solid lower portion (6) on the side surface of which at least one indentation (7) is found, said element being closable by means of a screw cap optionally provided with a head having a polyhedral-shaped hollow ;

— an abutment (8), optionally threaded on its inside (9), shaped substantially like a truncated cone with axis perpendicular to the widest end or obliquely inclined with respect to said end, optionally provided with at least one through bore on the side surface, the widest end being provided with a hollow neck (10) having the external cross-section profile in the shape of a regular polygon, the ratio between the number of vertexes in the cross-section profile of the inner housing on the widened head (2) of the endossial element (1) and the number of vertexes in the external cross-section profile of the hollow neck (10) being such as to permit a multiplicity of reciprocal rotations by a fraction of a round angle between the endossial element and the abutment ;

— an element (11) for fixing of the abutment to the endossial element ; and

— an element (12) for fixing the denture onto the abutment.

FIG.4

EP 0 504 119 A1

The present invention has as its subject an article for dental implantation having an abutment capable of multiple orientation. The product is new and involves an inventive step, in that it is not obvious to a person skilled in this field and aware of the prior art.

As it is known, the problem of performing endossial implantation in dentistry has already been confronted in the past. In fact, the state of the art shows a number of devices of the type known as fixtures. These fixtures are formed by a portion which is inserted into the bone, where it remains for several months, and by another portion, fixed at a later date onto the first portion, which has the function of supporting the denture. In order to insert the first portion into the bone, a receiving channel is made by milling, and said channel houses the part. The top, which is hollow and threaded, is temporarily closed by means of a small screw (plug screw or healing screw) to await consolidation with the bone. The traditional plug screw is extremely difficult to apply, as it tends to escape, especially when working in the rear and upper portions of the mouth, where it is also difficult to manoeuvre the special screwdrivers required to turn the screw itself. The abutment, which has a threaded stem, is screwed into the inside of the endossial element, said element being provided with a hollow, similarly threaded portion.

However, this conventional system used to join the two parts comes up against a series of drawbacks, among which the following can be mentioned:

– mastication puts a strain on the microthreading on the stem of the abutment, deforming it and causing its initial unscrewing and/or loosening of the abutment and the prosthetic device fixed thereto;

– if the abutment is not aligned with the others, or with the existing natural teeth, it is set parallel in the laboratory. This means that, after having screwed the abutment to a special support, a force is applied to bend the abutment on its neck and give it the correct inclination. When the abutment is then re-screwed into position in the mouth, two types of problem are found: a) the microthreading on the stem of the abutment has been deformed during the process to make it parallel, and therefore the abutment no longer screws back into its exact starting position, and is consequently found to be bent in a totally different direction, and b) if the denture refers to a signle tooth, the bent abutment cannot be screwed back into the mouth because it hits against neighbouring teeth.

There are also other systems for fixing in abutments by means of screwing. However, these systems are not satisfactory either. In effect, as mastication puts force on the thread in all cases, these systems loosen with use.

It has now been surprisingly found that the adoption of the article for dental implantation having an abutment capable of multiple orientation according to the present invention makes it possible to overcome all the above mentioned drawbacks, furthermore offering other advantages which will be shown in the following.

The article for dental implantation according to the present invention is characterized by the fact that it consists essentially of a combination of the following parts:

– an endossial element, optionally threaded, with a widened head with the internal housing having a cross- section profile in the form of a regular polygon, with a hollow central portion, optionally threaded on its inside, with a solid lower portion on the side surface of which at least one indentation is found, said element being closable by means of a screw cap optionally provided with a head having a polyhedral- shaped hollow;

– an abutment, optionally threaded on its inside, shaped substantially like a truncated cone with axis perpendicular to the widest end or obliquely inclined with respect to said end, optionally provided with at least one through bore on the side surface, the widest end being provided with a hollow neck having the external cross-section profile in the shape of a regular polygon, the ratio between the number of vertexes in the cross-section profile of the inner housing on the widened head of the endossial element and the number of vertexes in the external cross-section profile of the hollow neck being such as to permit a multiplicity of reciprocal rotations by a fraction of a round angle between the endossial element and the abutment;

– an element for fixing of the abutment to the endossial element; and

– an element for fixing the denture onto the abutment.

The solid lower end of the endossial element can have a rounded shape.

The element for fixing the denture onto the abutment can have a head with a polyhedral-shaped hollow and a funnel-shaped neck.

The parts making up the article for dental implantation according to the invention can be made, independently one from the other, in biocompatible material, optionally resistant to the stresses caused by mastication, for example titanium and alloys thereof, or magnetic metals.

The above mentioned construction material can be associated with another biocompatible material, for example hydroxyapatite.

Use of the product for dental implantation according to the present invention, as well as overcoming the disadvantages of conventional devices, makes it possible to obtain further advantages which will be briefly mentioned in the following:

– the particular shape of the endossial element, with its widened head, makes it possible to insert an abutment of diameter sufficient to support a denture and to connect said denture, reducing the diameter of the stem of the element itself, even in extremely thin areas of bone;

– the plug screw can be positioned and screwed in with greater ease and more securely, thanks to the fact that a polyhedral-shaped cavity is provided on its head, allowing it to be fitted into a special instrument with a socket head;

– the abutment can be made in a straight version or in a ready-angled version and with different lengths and degrees of angulation. The special way in which the regular polygon cross-section of the endossial element's internal housing fits onto the polygonal external cross-section of the hollow neck makes it possible both to avoid unscrewing of the abutment, and to rotate the bent abutment, when necessary, into the correct position in which it is parallel to the other elements;

– the screw blocking the abutment to the endossial element does not loosen, because the rotational movements of the abutment are blocked by the above fit. Furthermore, its thread does not suffer wear because the stress caused by mastication are not directed to the thread, but to the fit according to the present invention.

A description of a general nature has been given hereabove of the article subject of the present invention. A more detailed description of a preferred embodiment thereof will now be given, with the aim of better understanding its objects, characteristics, advantages and manner of operating.

Figure 1 shows a side view of an embodiment of the endossial element according to the present invention.

Figure 2 shows a cross-section along line II-II of figure 1 in the direction of the arrows, and also shows, with a dotted line, the external cross-section of the hollow neck of the abutment.

Figure 3 is a cross-section taken along line III-III of figure 1 in the direction of the arrows.

Figure 4 shows, aligned with the head of the endossial element, a longitudinal section of the other components of the specific embodiment of the article according to the invention.

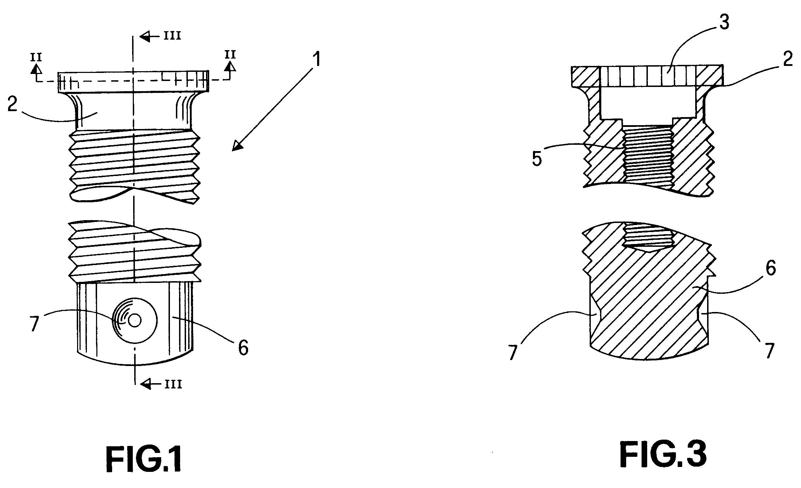

With reference to figures 1, 2 and 3, the threaded endossial element 1 is made up of a widened head 2 and a lower portion 6 provided with two indentations 7.

The internal housing of the endossial element has a cross-section 3 in the form of a regular polygon with eighteen vertexes. The central portion 4 is hollow and threaded on its inside 5.

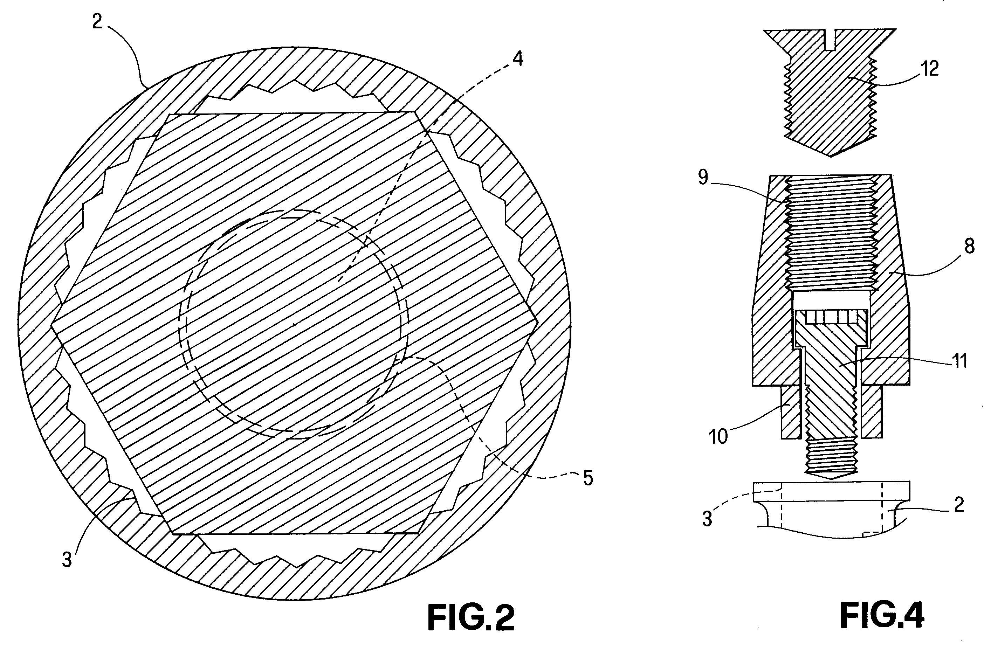

With reference to figure 4, the embodiment according to the present invention is provided with an abutment 8, threaded on its inside 9, shaped substantially like a truncated cone, with axis parallel to the widest end. On the widest end, the hollow neck 10 is found, said neck having an external cross-section profile in the shape of a regular polygon with six vertexes. The fixing element 11 allows connection of the abutment 8 to the endossial element 2. The screw 11 allows the abutment to be fixed to the endossial element; the head of the fixing screw 11 having a head with a polyhedral shaped indentation. The fixing screw 12 allows the denture to be fixed to the abutment. Said screw has a funnel-shaped neck.

Given that the internal housing of the widened head 2 of the endossial element 1 has a cross-section profile in the shape of a regular polygon with eighteen vertexes and the hollow neck 10 has an outer cross-section profile in the shape of a regular polygon with six vertexes, it is possible to position the abutment and the endossial element at a number of angles, with 10° steps.

The article for dental implantation according to the present invention is put together as follows. The endossial element 1 is inserted into the bone after having prepared a seat for it using mills and tapping machines. Its top opening is closed by means of the plug screw, the head of which is provided with a polyhedral indentation, not shown in the figure, and the whole is then covered with mucous membrane. After several months, a circular incision is made in the mucous membrane in correspondence with the plug screw, the latter is removed and the abutment 10 is fitted into the desired position. The abutment is fixed by means of a screw 11 which passes through it and screws into the hollow, threaded portion of the endossial element. The denture, made using high-precision casting techniques, fits exactly onto the abutment 10, and is fixed thereto by means of the denture fixing screw 12.

## Claims

1. Article for dental implantation, characterized in that it consists essentially in a combination of the following parts:

   – an endossial element (1), optionally threaded, with a widened head (2) with the internal housing having a cross-section profile in the form of a regular polygon (3), with a hollow central portion (4), optionally threaded on its inside (5), with a solid lower portion (6) on the side surface of which at least one indentation (7) is found, said element being closable by means of a screw cap optionally provided with a head having a polyhedral-shaped hollow;

   – an abutment (8), optionally threaded on its inside (9), shaped substantially like a truncated cone with axis perpendicular to the widest end or obliquely inclined with respect to said end, optionally provided with at least one through bore on the side surface, the widest end being provided with a hollow neck (10) having the external cross-section profile in the shape of a regular polygon, the ratio between the number of vertexes in the cross-section profile of the inner housing on the widened head (2) of the endossial element (1) and the number of vertexes in the external cross-section profile of the hollow neck (10) being such as to permit a multiplicity of reciprocal rotations by a fraction of a round angle between the endossial element and the abutment;
– an element (11) for fixing of the abutment to the endossial element; and
– an element (12) for fixing the denture onto the abutment.

2. Article for dental implantation according to claim 1, in which the solid lower portion of the endossial element is rounded in shape.

3. Article for dental implantation according to claims 1 or 2, in which the element (12) fixing the denture to the abutment is a screw with a polyhedral-shaped hollow on its head.

4. Article for dental implantation according to any one of the preceding claims, in which the element fixing the denture to the abutment has a funnel-shaped neck.

5. Article for dental implantation according to any one of the preceding claims, in which the component parts are manufactured, independently one from the other, in biocompatible material, optionally capable of supporting the stresses caused by mastication.

6. Article for dental implantation according to the preceding claim, in which the construction material is selected from the group comprising titanium and alloys thereof, or magnetic materials.

7. Article for dental implantation according to claims 5 or 6, in which the biocompatible construction material is associated with another biocompatible material.

8. Article for dental implantation according to claim 7, in which the associated biocompatible material is hydroxyapatite.

**FIG.1**

**FIG.3**

EP 0 504 119 A1

FIG.4

FIG.2

European Patent
Office

**EUROPEAN SEARCH REPORT**

Application Number

EP    92 83 0104

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 176 709 (SYMINGTON ET AL) | 1 | A61C8/00 |
| A | * page 3, line 58 - line 63; claims 2,4,5,12; figures 1,4 * | 4,6 | |
| | --- | | |
| Y | DE-U-9 012 548 (KLAUS) | 1 | |
| A | * claims 1,2; figures * | 2 | |
| | --- | | |
| A | EP-A-0 323 421 (NOBELPHARMA AB) * column 2, line 45 - column 3, line 3; claims 1,5; figures 1,2,4 * | 1 | |
| | --- | | |
| A | EP-A-0 000 549 (BAYER AG) * page 6, line 12 - line 23; claim 1; figures 1-4 * | 1 | |
| | --- | | |
| A | DE-U-8 905 146 (GRAFELMANN) * claims 1-3; figures * | 1 | |
| | ----- | | |
| | | | **TECHNICAL FIELDS SEARCHED (Int. Cl.5)** |
| | | | A61F A61C |

| The present search report has been drawn up for all claims | | |
|---|---|---|
| Place of search | Date of completion of the search | Examiner |
| BERLIN | 19 MAY 1992 | KANAL P. |